# EUROPEAN PATENT SPECIFICATION

(11) **EP 4 212 954 B1**
(45) Date of publication and mention of the grant of the patent: **28.01.2026**
(21) Application number: 20953377.7
(22) Date of filing: 08.09.2020
(51) Int. Cl.: G03B 21/20, G02B 17/06, G03B 33/12, G02B 27/10, G02B 27/14

(54) **OPTICAL SYSTEM COMPRISING HYBRID LIGHT SOURCE, AND PROJECTOR DEVICE COMPRISING SAME**
OPTISCHES SYSTEM MIT HYBRIDER LICHTQUELLE UND PROJEKTORVORRICHTUNG DAMIT
SYSTÈME OPTIQUE COMPRENANT UNE SOURCE DE LUMIÈRE HYBRIDE ET DISPOSITIF DE PROJECTEUR LE COMPRENANT

(43) Date of publication of application: 19.07.2023
(73) Proprietor: LG ELECTRONICS INC., Yeongdeungpo-gu Seoul 07336 (KR)
(72) Inventor: KIM, Eunjin, Seoul 06772 (KR); CHOI, Hoyoung, Seoul 06772 (KR); BOK, Kiso, Seoul 06772 (KR); AHN, Jaehoon, Seoul 06772 (KR); LEE, Jaehoon, Seoul 06772 (KR)
(74) Representative: Frenkel, Matthias Alexander
(86) International application number: PCT/KR2020/012126
(87) International publication number: WO 2022/054975

(56) References cited:
- JP-A- 2008 046 212
- JP-A- 2018 045 111
- KR-A- 20110 009 823
- KR-A- 20130 031 636
- KR-A- 20190 136 875
- US-A1- 2012 268 503
- US-A1- 2013 250 255
- US-A1- 2015 002 823
- US-A1- 2019 041 735
- US-A1- 2021 191 138
- US-B1- 10 139 716
- US-B1- 8 562 173

## Description

### [Technical Field]

The present disclosure relates to an optical system composed of a hybrid light source and a projector apparatus including the same.

### [Background Art]

A projector is an apparatus that has a light source inside the apparatus and projects an image implemented using light generated from the light source onto a screen.

The projector realizes an image by outputting light of three colors, Red, Green, and Blue, through a light source.

Meanwhile, when a lamp is used as a light source of a projector apparatus, a high-brightness image can be output, but the life of the lamp is short and components need to be frequently replaced. When using Light Emitting Diode (LED) as a light source of a projector apparatus, there are advantages in terms of component size and manufacturing cost, but there is a disadvantage that the overall brightness of the output image is lowered, and when using a laser diode, the brightness of the output image is high, but there is a disadvantage in that the product size increases and the manufacturing cost increases.

Such a light source using LED light sources and dichroic mirrors is known from US 8 562 173 B1.

### [Disclosure]

### [Technical Problem]

An object of the present disclosure is to provide a projector apparatus including a hybrid optical system using both an LED and a laser diode as a light source.

An object of the present disclosure is to provide a projector apparatus that minimizes differences in brightness and color depending on light sources that may occur when an LED and a laser diode are used as light sources at the same time.

### [Technical Solution]

An optical system composed of a hybrid light source according to an embodiment of the present disclosure, the optical system is defined by the features of independent claim 1.

The first wavelength may be a longer wavelength than the second wavelength.

The first wavelength may be 650 nm, the second wavelength may be 615 nm, and the third wavelength may be 415 nm.

The fourth wavelength may be 550 nm.

The optical system further includes a first dichroic mirror reflecting the first light; a second dichroic mirror reflecting the second light; and a third dichroic mirror reflecting the third light and the fourth light.

The first dichroic mirror reflects the first light in the first direction, the second dichroic mirror reflects the second light in the first direction, the third dichroic mirror reflects the third light in the first direction and reflects the fourth light to the green phosphor, and the green phosphor emits the fifth light in the first direction.

The second light source is disposed at a position facing the first light source, and the first dichroic mirror and the second dichroic mirror are disposed between the first light source and the second light source.

The second dichroic mirror is disposed to cross the first dichroic mirror.

The third light source is disposed at a position facing the fourth light source, and the third dichroic mirror is disposed between the third light source and the fourth light source.

The green phosphor is disposed in a direction opposite to the first direction from the third dichroic mirror.

The first red LED, the second red LED, the blue LED, the blue laser diode, the green phosphor, the first dichroic mirror, the second dichroic mirror, and the third dichroic mirror may be disposed on the same plane.

The first direction may be a direction of the lens of the projector or the display panel of the projector.

A projector apparatus including an optical system composed of a hybrid light source according to an embodiment is defined by the features of claim 8.

### [Advantageous Effect]

According to an embodiment of the present disclosure, there is an advantage of providing an apparatus that maximizes the advantages of using an LED and a laser diode light source separately.

According to an embodiment of the present disclosure, there is an advantage in providing an apparatus in which the overall size of a product is minimized because the number of components is reduced and the internal configuration is simple.

### [Description of Drawings]

FIG. 1 is a perspective view illustrating a projector apparatus according to an embodiment of the present disclosure.
FIG. 2 is an exemplary diagram illustrating an internal configuration of a projector apparatus according to an embodiment of the present disclosure.
FIG. 3 is an exemplary diagram illustrating reflectance of a dichroic mirror included in an optical system of a projector apparatus according to an embodiment of the present disclosure.
FIG. 4 is an exemplary diagram illustrating an internal configuration of a projector apparatus according to another embodiment of the present disclosure.

### [Best Mode]

Hereinafter, embodiments related to the present disclosure will be described in more detail with reference to the drawings. The suffixes "module" and "unit" for components used in the following description are given or used together in consideration of ease of writing the specification, and do not have meanings or roles that are distinct from each other by themselves.

The projector apparatus 10 or the optical system 100 of the projector apparatus according to the present disclosure may be applied not only to a projector and a projection TV, but also to a portable terminal having a projector function and a laptop computer. This is just an example, and the present disclosure can be used for all devices that implement images by projecting light onto a screen other than the devices described above.

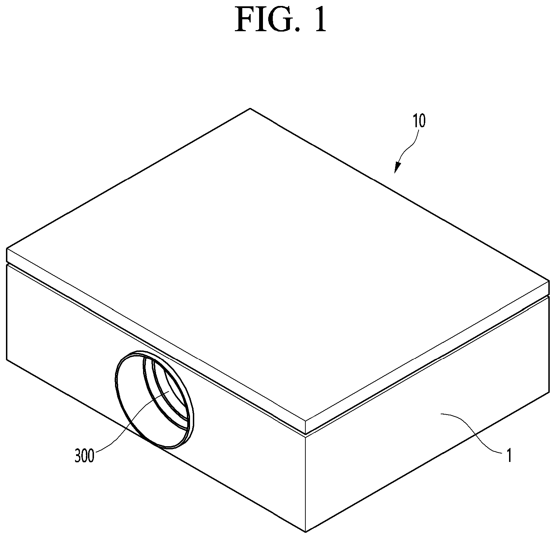

FIG. 1 is a perspective view illustrating a projector apparatus according to an embodiment of the present disclosure.

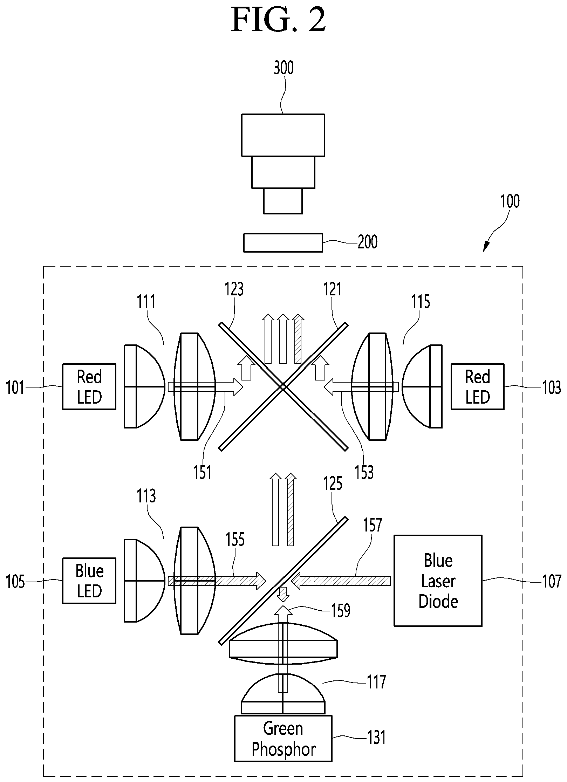

Referring to FIG. 1, the outer appearance of the projector apparatus 10 may be formed by the housing 1. Various optical components and electronic components may be embedded in the housing 1 of the projector apparatus 10. For example, an optical system 100 (refer to FIG. 2) and a display panel 200 (refer to FIG. 2) described below may be disposed inside the housing 1 of the projector apparatus 100. A lens 300 may be provided on one surface of the housing 1.

Hereinafter, one surface of the housing 1 where the lens 300 of the projector apparatus 10 is positioned is defined as the front surface of the projector apparatus 10, and the surface opposite to the front surface is defined as the rear surface of the projector apparatus 10.

Outside the housing 1 of the projector apparatus 10, various components related to the control of the projector apparatus 10 such as a user input interface (not illustrated) for receiving control commands of the projector apparatus 10, a power supply portion (not illustrated) for supplying electrical energy to the projector apparatus 10, a processor (not illustrated) in charge of overall control of the projector apparatus 10, and a sound output portion (not illustrated) that outputs sound of an image may be provided, and details about this are omitted.

When the light emitted from the optical system 100 inside the housing 1 of the projector apparatus 10 is formed into an image on the display panel 200 (see FIG. 2), and the image is magnified through the lens 300 and projected to the outside, the light may be implemented as an image on a screen (not illustrated) located in front of the projector apparatus 10.

Meanwhile, when a lamp is used as a light source of the projector apparatus 10, it is possible to output a high-brightness image, but there is a disadvantage in that lamp life is short and components must be frequently replaced. When using a Light Emitting Diode (LED) as the light source of the projector apparatus 10, there is a disadvantage that the overall brightness of the output image is lowered, and when using a laser diode, there is a disadvantage that the brightness of the output image is high, but the product size increases and the manufacturing cost thereof increases.

Therefore, the optical system 100 of the projector apparatus 10 of the present disclosure proposes a structure in which an LED and a laser diode are simultaneously used as light sources in order to overcome the conventional problems.

In addition, a projector apparatus 10 minimizing the difference in brightness and color of each light source, which is a problem that may occur when an LED and a laser diode are used as light sources at the same time, is presented.

Next, the optical system 100 of the projector apparatus 10 according to an embodiment of the present disclosure will be described in detail with reference to FIG. 2.

FIG. 2 is an exemplary diagram illustrating an internal configuration of a projector apparatus according to an embodiment of the present disclosure.

The optical system 100 may refer to a system of optical components in which mirrors or lenses are disposed in order to implement an image using reflection or refraction of light in the projector apparatus 10. The optical system 100 may generate light and diverge the light toward the display panel 200 or the lens 300.

The display panel 200 may be a panel that implements an image through light incident from the optical system 100. The display panel 200 may be an electrically controlled electronic device.

The display panel 200 may be disposed on the same line as the lens 300. For example, the surface of the display panel 200 and the surface of the lens 300 may be parallel surfaces.

The lens 300 may be at least one lens formed to magnify an image projected by the projector apparatus 10.

The optical system 100, the display panel 200, and the lens 300 of the present disclosure may be disposed on the same plane.

The present disclosure relates to an optical system 100 composed of a hybrid light source, and detailed descriptions of the display panel 200 and the lens 300 are omitted.

The optical system 100 of the present disclosure includes at least one light source 101, 103, 105, and 107 and at least one phosphor 131. Furthermore, the optical system 100 further includes one or more dichroic mirrors 121, 123, and 125 and one or more collimator lenses 111, 113, 115, and 117.

The light sources 101, 103, 105, and 107 may refer to objects formed to generate light by converting electrical energy into light energy. The light sources 101, 103, 105, and 107 generate any one of three primary colors of light: red (R), blue (B), and green (G). For example, the light sources 101, 103, 105, and 107 of the present disclosure include a light emitting diode (hereinafter referred to as 'LED'), a laser diode (hereinafter referred to as 'LD'), or the like that generates any one of red, blue, and green.

The collimator lenses 111, 113, 115, and 117 may be lenses disposed to convert light generated from the light sources 101, 103, 105, and 107 or the phosphor 131 into parallel light. The collimator lenses 111, 113, 115, and 117 may be disposed adjacent to the light sources 101, 103, 105, and 107 or the phosphor 131.

The dichroic mirrors 121, 123, and 125 mean objects coated with a special material to selectively transmit or reflect light of a specific wavelength. For example, the first dichroic mirror 121 reflects light of a first wavelength and transmit light of a shorter wavelength than the first wavelength. A detailed description of this will be described later. In addition, the dichroic mirrors 121, 123, and 125 may be referred to as dichroic filters.

The phosphor 131 may absorb light of a specific wavelength and emit light of a different wavelength from the absorbed wavelength. For example, the phosphor 131 emits green light by absorbing blue light. The phosphor 131 of the present disclosure may be a static phosphor plate in a fixed form or a phosphor wheel in a rotating form, but is not limited thereto. The phosphor 131 of the present disclosure may be referred to as a green phosphor 131.

A projector apparatus 10 including an optical system 100 composed of a hybrid light source according to an embodiment of the present disclosure may include a housing 1 having an inner space, a lens 300 provided on one surface of the housing 1, a display panel 200 disposed on the same line as the lens 300, and an optical system 100 disposed inside the housing 1 and emitting light toward the display panel 200 or the lens 300.

The lens 300 may be disposed on the same line as the optical system 100 and may be disposed in a first direction with respect to the optical system 100. Here, the first direction may mean a direction in which light is emitted through the optical system 100. In addition, the first direction may refer to a direction toward the front surface of the projector apparatus 10.

The optical system 100 of the present disclosure includes a first light source 101 emitting a first light 151 of a first wavelength, a second light source 103 emitting a second light 153 of a second wavelength, a third light source 105 emitting a third light 155 of a third wavelength, a fourth light source 107 emitting a fourth light 157 of a third wavelength, and a green phosphor 131 that converts the fourth light 157 into a fifth light 159 of the fourth wavelength. The optical system 100 of the present disclosure emits a first light 151, a second light 153, a third light 155, and a fifth light 159 in a first direction.

Hereinafter, unless otherwise limited, the wavelength of light may mean a peak wavelength. For example, light of 650 nm means light including light of 650 nm and light of surrounding wavelengths and may mean that the peak wavelength is 650 nm.

The first light source 101 and the second light source 103 are light sources that emit red light among three primary colors. In addition, the first light source 101 and the second light source 103 are LEDs, and the first light source 101 may emit light with a longer wavelength than the second light source 103. For example, the first light source 101 may be an LED emitting red light having a peak wavelength of a first wavelength (for example, 650 nm), and the second light source 103 may be an LED emitting red light having a peak wavelength of a second wavelength (for example, 615 nm) shorter than the first wavelength. The first light source 101 may be referred to as a first red LED, and the second light source 103 may be referred to as a second red LED.

Since the first light source 101 and the second light source 103 of the present disclosure are composed of two red LEDs having different wavelengths, there is an advantage of being able to produce a brightness similar to that of a laser diode described later and to realize a variety of colors.

The aforementioned wavelengths of 650 nm and 615 nm are just examples, and the first light source 101 and the second light source 103 may be composed of all LEDs emitting red light, and the number is not limited to two.

In the present disclosure, the first light source 101 and the second light source 103 are light sources for red among the three primary colors (R, G, and B) of light.

The third light source 105 and the fourth light source 107 are light sources that emit blue among three primary colors of light. In other words, the third light source 105 and the fourth light source 107 may emit light of the same wavelength. The third light source 105 and the fourth light source 107 emit light having a shorter wavelength than the first light source 101 and the second light source 103. The third light source 105 and the fourth light source 107 emit blue light having a peak wavelength of a third wavelength (for example, 415 nm).

In addition, the third light source 105 is an LED, and the fourth light source 107 is a laser diode. Therefore, the wavelengths of light emitted from the third light source 105 and the fourth light source 107 may not be exactly the same, and since the above-described wavelength of 415 nm is only an example, the third light source 105 and the fourth light source 107 may be composed of any LED or laser diode that emits blue light. The third light source 105 may be referred to as a blue LED, and the fourth light source 107 may be referred to as a blue laser diode.

In the present disclosure, the third light source 105 composed of LEDs is a light source for blue among the three primary colors of light, and the fourth light source 107 composed of laser diodes is a light source for green among the three primary colors of light. Blue light emitted from the laser diode may be absorbed by the phosphor 131 and then emitted as green light.

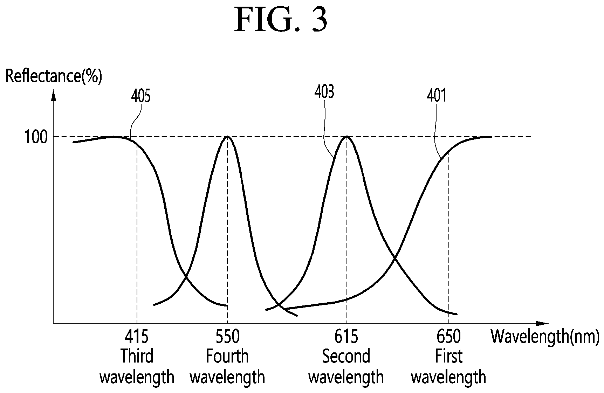

Next, with further reference to FIG. 3, processes of reflection and transmission of light according to the disposition structure of the optical system 100 according to the present disclosure will be described, and a method for the optical system 100 to project three primary colors of light will be described.

FIG. 3 is an exemplary diagram illustrating reflectance of a dichroic mirror included in an optical system of a projector apparatus according to an embodiment of the present disclosure.

In FIG. 3, a first curve 301 represents the reflectance according to the wavelength of incident light of the first dichroic mirror 121, and a second curve 303 represents the reflectance according to the wavelength of incident light of the second dichroic mirror 123. The third curve 305 represents the reflectance according to the wavelength of the incident light of the third dichroic mirror 125.

According to the first curve 301, the first dichroic mirror 121 has 100% reflectance for light having a wavelength equal to or greater than the first wavelength, so that light having a wavelength longer than the first wavelength (for example, 650 nm) is reflected, and light having a wavelength shorter than the first wavelength is allowed to pass.

According to the second curve 303, the second dichroic mirror 123 has a reflectance of 100% for light having a wavelength of which the length of the wavelength is the second wavelength, so that light having a second wavelength (for example, 615 nm) is reflected, and light of a first wavelength longer than the second wavelength or light of a third wavelength shorter than the second wavelength is allowed to pass.

According to the third curve 305, the third dichroic mirror 125 has a reflectance of 100% for light having a wavelength equal to or less than the third wavelength, so that light having a wavelength equal to or less than the third wavelength (for example, 415 nm) is reflected, and light having a wavelength longer than the third wavelength is allowed to pass.

Returning to FIG. 2 again, a first dichroic mirror 121 and a second dichroic mirror 123 crossed in an X shape may be disposed between the first light source 101 and the second light source 103.

As described above, the first dichroic mirror 121 reflects light having a first wavelength or a wavelength longer than the first wavelength and allow light having a shorter wavelength than the first wavelength to be passed. Therefore, the first dichroic mirror 121 reflects the first light 151 of the first wavelength generated from the first light source 101 and incident to the first dichroic mirror 121, and allow light of shorter wavelengths than the first wavelength to be passed. In other words, The first dichroic mirror 121 allows the second light 153 emitted from the second light source 103 emitting light having a shorter wavelength than the first light source 101, the third light 155 emitted from third light source 105, and the fifth light 159 emitted from the fourth light source 107, absorbed by the phosphor, and then emitted, to be passed.

The second dichroic mirror 123 reflects light of a second wavelength and allow pass light of a first wavelength longer than the second wavelength or light of a third wavelength shorter than the second wavelength to be passed. Accordingly, the second dichroic mirror 123 reflects the second light 153 of the second wavelength generated from the second light source 103 and incident to the second dichroic mirror 123, and allows light of longer or shorter wavelengths than the second wavelength be passed. In other words, the second dichroic mirror 123 allows the first light 151 emitted from the first light source 101 generating light having a longer wavelength than the second light source 103 to be passed. In addition, the third light 155 emitted from the third light source 105 generating light having a shorter wavelength than the second light source 103 and the fifth light 159 emitted from the fourth light source 107, absorbed by the phosphor, and then emitted. Light 159 is allowed to pass.

The third dichroic mirror 125 reflects light of a third wavelength or a wavelength shorter than the third wavelength and pass light of a wavelength longer than the third wavelength. Accordingly, the third dichroic mirror 125 reflects the third light 155 of the third wavelength generated from the third light source 105 and incident to the first surface of the third dichroic mirror 125 and the fourth light 157 of the third wavelength generated from the fourth light source 107 and incident to the second surface of the third dichroic mirror 125.

At this time, the fourth light 157 of the third wavelength generated from the fourth light source 107 and incident on the second surface of the third dichroic mirror 125 can be incident on the green phosphor 131 disposed in a second direction opposite to the aforementioned first direction. The green phosphor 131 is an object that absorbs incident light and emits light having a longer wavelength than the wavelength of the incident light. For example, the green phosphor 131 absorbs the fourth light 157 of a third wavelength (for example, 415 nm) and emit fifth light 159 of a fourth wavelength (for example, 550 nm) longer than the third wavelength. In other words, the green phosphor 131 absorbs the fourth light 157 that is blue light and emit the fifth light 159 that is green light.

The third dichroic mirror 125 reflects the fourth light 157 emitted from the fourth light source 107 and incident on the second surface, and allows the fifth light 159 converted through the phosphor 131 and incident on the second surface to be passed.

In summary, the first light 151 of the first wavelength emitted from the first light source 101 is reflected from the first dichroic mirror 121 and emitted in a first direction, and the second light 153 of the second wavelength emitted from the second light source 103 is reflected from the second dichroic mirror 123 and emitted in the first direction, and the third light 155 of the third wavelength emitted from the third light source 105 is reflected from the third dichroic mirror 125 and emitted in the first direction, and the fourth light 157 of the third wavelength emitted from the fourth light source 107 is converted into the fifth light 159 in the phosphor 131 and emit in the first direction.

Through the above-described embodiment, the present disclosure can implement all of R, G, and B, an LED having relatively low brightness is disposed close to the lens 300, a laser diode having relatively high brightness is disposed far from the lens 300, and thus there is an advantage in that a difference in brightness that may occur according to the type of light source can be adjusted.

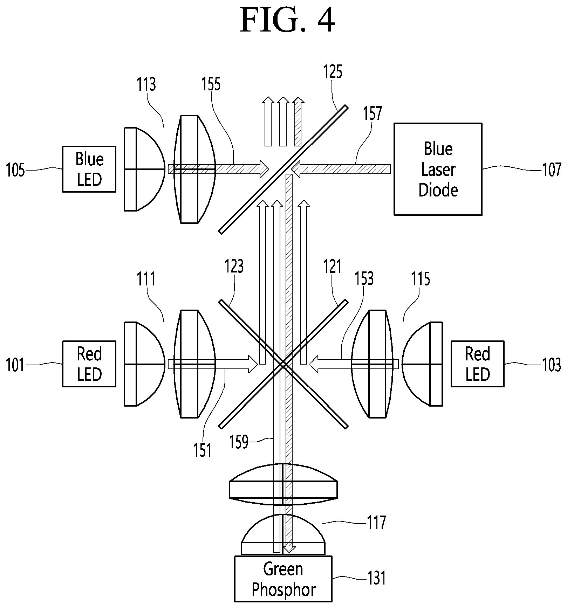

Next, another embodiment of an optical system included in the projector apparatus of the present disclosure will be described with reference to FIG. 4.

FIG. 4 is an exemplary diagram illustrating an internal configuration of a projector apparatus according to another embodiment of the present disclosure.

The embodiment of FIG. 4 may be an embodiment in which characteristics of the optical elements are the same as those of the embodiment described in FIG. 2, but only positions are changed. Therefore, a description overlapping with that of FIG. 2 will be omitted.

According to the embodiment of FIG. 4, the first light source 101 emitting light of a first wavelength and the second light source 103 emitting light of a second wavelength is disposed in the rear surface of the projector apparatus, that is, disposed remotely from the lens 300. The third light source 105 and the fourth light source 107 emitting light of a third wavelength are disposed in the front surface of the projector apparatus, that is, disposed close to the lens 300.

Since the first dichroic mirror 121 and the second dichroic mirror 123 pass the fourth light 157 of the third wavelength emitted from the fourth light source 107, the light emitted from the fourth light source 107 is converted into fifth light 159 of a fourth wavelength in the phosphor 131, and the fifth light 159 of a fourth wavelength longer than the third wavelength and shorter than the first and second wavelengths passes through all of the first, second, and third dichroic mirrors 121, 123, and 125 and be incident in the direction of the display panel 200 or the lens 300, which is the first direction.

According to the embodiment of FIG. 4, as a light source for emitting blue light among R, G, and B is composed of one LED, a light source for emitting red light is composed of two LEDs, and the light source for emitting green light is composed of a laser diode with relatively bright brightness, there is an advantage in that the problem that the brightness of blue light can be darkened can be compensated for by locating a light source for emitting blue light close to the lens.

The above description is merely an example of the technical idea of the present disclosure, and various modifications and variations can be made to those skilled in the art without departing from the essential characteristics of the present disclosure.

Therefore, the embodiments disclosed in this disclosure are not intended to limit the technical idea of the present disclosure but to explain, and the scope of the technical idea of the present disclosure is not limited by these embodiments.

Each of the embodiments disclosed in this specification may be practiced alone or in combination with other embodiments.

The protection scope of the present disclosure should be construed by the claims below, and all technical ideas within the scope equivalent thereto should be construed as being included in the scope of the present disclosure.

## Claims

1. An optical system (100) composed of a hybrid light source, the optical system (100) comprising:
a first red light emitting diode (101), LED, emitting a first light of a first wavelength;
a second red LED (103) emitting a second light of a second wavelength;
a blue LED (105) emitting a third light of a third wavelength;
a blue laser diode (107) emitting a fourth light of the third wavelength; and
a green phosphor (131) converting the fourth light into a fifth light of a fourth wavelength,
wherein the first light, the second light, the third light, and the fifth light are emitted in a first direction,
wherein a first dichroic mirror (121) reflecting the first light to the first direction and a second dichroic mirror (123) reflecting the second light to the first direction are disposed between the first light source (101) and the second light source (103), the second dichroic mirror (123) is disposed to cross the first dichroic mirror (121),
wherein a third dichroic mirror (125) is disposed between the third light source (105) and the fourth light source (107), the second dichroic mirror (123) and the third dichroic mirror (125) are arranged in line,
wherein the third dichroic mirror (125) reflects the third light emitted from the blue LED (105) to the first direction, and the fourth light emitted from the blue laser diode (107) to a second direction opposite to the first direction, and
wherein the third dichroic mirror (125) transmits the fifth light converted from the green phosphor (131) to the first direction.

2. The optical system (100) of claim 1,
wherein the first wavelength is a longer wavelength than the second wavelength.

3. The optical system (100) of claim 2,
wherein the first wavelength is 650 nm,
wherein the second wavelength is 615 nm, and
wherein the third wavelength is 415 nm.

4. The optical system (100) of claim 2,
wherein the fourth wavelength is 550 nm.

5. The optical system (100) of claim 1,
wherein the green phosphor (131) is disposed in a direction opposite to the first direction from the third dichroic mirror (125).

6. The optical system (100) of claim 1,
wherein the first red LED (101), the second red LED (103), the blue LED (105), the blue laser diode (107), the green phosphor (131), the first dichroic mirror (121), the second dichroic mirror (123), and the third dichroic mirror (125) are disposed on the same plane.

7. The optical system (100) of claim 1,
wherein the first direction is a direction of the lens (300) of the projector (10) or the display panel (200) of the projector (10).

8. A projector apparatus (10) including the optical system (100) of claim 1, the projector apparatus (10) comprising:
a housing (1) having an inner space;
a lens (300) provided on one surface of the housing (1);
a display panel (200) disposed on the same line as the lens (300); and
the optical system (100) of claim 1 disposed inside the housing.

## Patentansprüche

1. Optisches System (100), bestehend aus einer Hybrid-Lichtquelle, wobei das optische System (100) umfasst:
eine erste rote Leuchtdiode (101), LED, die ein erstes Licht einer ersten Wellenlänge emittiert;
eine zweite rote LED (103), die ein zweites Licht einer zweiten Wellenlänge emittiert;
eine blaue LED (105), die ein drittes Licht einer dritten Wellenlänge emittiert;
eine blaue Laserdiode (107), die ein viertes Licht der dritten Wellenlänge emittiert; und
einen grünen Leuchtstoff (131), der das vierte Licht in ein fünftes Licht einer vierten Wellenlänge umwandelt,
wobei das erste Licht, das zweite Licht, das dritte Licht und das fünfte Licht in einer ersten Richtung emittiert werden,
wobei ein erster dichroitischer Spiegel (121), der das erste Licht in die erste Richtung reflektiert, und ein zweiter dichroitischer Spiegel (123), der das zweite Licht in die erste Richtung reflektiert, zwischen der ersten Lichtquelle (101) und der zweiten Lichtquelle (103) angeordnet sind, wobei der zweite dichroitische Spiegel (123) so angeordnet ist, dass er den ersten dichroitischen Spiegel (121) kreuzt,
wobei ein dritter dichroitischer Spiegel (125) zwischen der dritten Lichtquelle (105) und der vierten Lichtquelle (107) angeordnet ist, der zweite dichroitische Spiegel (123) und der dritte dichroitische Spiegel (125) in einer Linie angeordnet sind,
wobei der dritte dichroitische Spiegel (125) das von der blauen LED (105) emittierte dritte Licht in die erste Richtung und das von der blauen Laserdiode (107) emittierte vierte Licht in eine zweite Richtung entgegengesetzt zur ersten Richtung reflektiert, und
wobei der dritte dichroitische Spiegel (125) das von dem grünen Leuchtstoff (131) umgewandelte fünfte Licht in die erste Richtung transmittiert.

2. Optisches System (100) nach Anspruch 1,
wobei die erste Wellenlänge eine längere Wellenlänge als die zweite Wellenlänge ist.

3. Optisches System (100) nach Anspruch 2,
wobei die erste Wellenlänge 650 nm beträgt,
wobei die zweite Wellenlänge 615 nm beträgt und
wobei die dritte Wellenlänge 415 nm beträgt.

4. Optisches System (100) nach Anspruch 2,
wobei die vierte Wellenlänge 550 nm beträgt.

5. Optisches System (100) nach Anspruch 1,
wobei der grüne Leuchtstoff (131) in einer Richtung entgegengesetzt zur ersten Richtung vom dritten dichroitischen Spiegel (125) angeordnet ist.

6. Optisches System (100) nach Anspruch 1,
wobei die erste rote LED (101), die zweite rote LED (103), die blaue LED (105), die blaue Laserdiode (107), der grüne Leuchtstoff (131), der erste dichroitische Spiegel (121), der zweite dichroitische Spiegel (123) und der dritte dichroitische Spiegel (125) auf derselben Ebene angeordnet sind.

7. Optisches System (100) nach Anspruch 1,
wobei die erste Richtung eine Richtung der Linse (300) des Projektors (10) oder des Anzeigepanels (200) des Projektors (10) ist.

8. Projektionsvorrichtung (10) mit dem optischen System (100) nach Anspruch 1, wobei die Projektionsvorrichtung (10) umfasst:
ein Gehäuse (1) mit einem Innenraum;
eine Linse (300), die auf einer Oberfläche des Gehäuses (1) vorgesehen ist;
ein Anzeigepanel (200), das auf derselben Linie wie die Linse (300) angeordnet ist; und
das optische System (100) gemäß Anspruch 1, das innerhalb des Gehäuses angeordnet ist.

## Revendications

1. Système optique (100) composé d'une source lumineuse hybride, le système optique (100) comprenant:
une première diode électroluminescente rouge (101), LED, émettant une première lumière d'une première longueur d'onde;
une deuxième LED rouge (103) émettant une deuxième lumière d'une deuxième longueur d'onde;
une LED bleue (105) émettant une troisième lumière d'une troisième longueur d'onde;
une diode laser bleue (107) émettant une quatrième lumière de la troisième longueur d'onde; et
un phosphore vert (131) convertissant la quatrième lumière en une cinquième lumière d'une quatrième longueur d'onde,
dans lequel la première lumière, la deuxième lumière, la troisième lumière et la cinquième lumière sont émises dans une première direction,
dans lequel un premier miroir dichroïque (121) réfléchissant la première lumière dans la première direction et un deuxième miroir dichroïque (123) réfléchissant la deuxième lumière dans la première direction sont disposés entre la première source lumineuse (101) et la deuxième source lumineuse (103), le deuxième miroir dichroïque (123) est disposé de manière à croiser le premier miroir dichroïque (121),
dans lequel un troisième miroir dichroïque (125) est disposé entre la troisième source lumineuse (105) et la quatrième source lumineuse (107), le deuxième miroir dichroïque (123) et le troisième miroir dichroïque (125) sont disposés en ligne,
dans lequel le troisième miroir dichroïque (125) réfléchit la troisième lumière émise par la LED bleue (105) dans la première direction, et la quatrième lumière émise par la diode laser bleue (107) dans une deuxième direction opposée à la première direction, et
dans lequel le troisième miroir dichroïque (125) transmet la cinquième lumière convertie à partir du phosphore vert (131) vers la première direction.

2. Système optique (100) selon la revendication 1,
dans lequel la première longueur d'onde est une longueur d'onde plus longue que la deuxième longueur d'onde.

3. Système optique (100) selon la revendication 2,
dans lequel la première longueur d'onde est de 650 nm,
dans lequel le deuxième longueur d'onde est de 615 nm, et
dans lequel le troisième longueur d'onde est de 415 nm.

4. Système optique (100) selon la revendication 2,
dans lequel la quatrième longueur d'onde est de 550 nm.

5. Système optique (100) selon la revendication 1,
dans lequel le phosphore vert (131) est disposé dans une direction opposée à la première direction à partir du troisième miroir dichroïque (125).

6. Système optique (100) selon la revendication 1,
dans lequel la première LED rouge (101), la deuxième LED rouge (103), la LED bleue (105), la diode laser bleue (107), le phosphore vert (131), le premier miroir dichroïque (121), le deuxième miroir dichroïque (123) et le troisième miroir dichroïque (125) sont disposés sur le même plan.

7. Système optique (100) selon la revendication 1,
dans lequel la première direction est une direction de la lentille (300) du projecteur (10) ou de l'écran d'affichage (200) du projecteur (10).

8. Appareil de projection (10) comprenant le système optique (100) selon la revendication 1, l'appareil de projection (10) comprenant:
un boîtier (1) comportant un espace intérieur;
une lentille (300) disposée sur une face du boîtier (1);
un écran d'affichage (200) disposé sur la même ligne que la lentille (300); et
le système optique (100) selon la revendication 1 disposé à l'intérieur du boîtier.
